# EUROPEAN PATENT APPLICATION

(11) **EP 4 729 886 A1**
(43) Date of publication of application: **22.04.2026**
(21) Application number: 24823156.5
(22) Date of filing: 14.05.2024
(51) Int. Cl.: G01C 21/26, G01C 21/34, G16Y 10/40, G16Y 20/20, G16Y 40/60

(54) **MAP PROCESSING DEVICE AND MAP PROCESSING METHOD**

(30) Priority: 15.06.2023 JP 2023098611
(71) Applicant: Astemo, Ltd., Chiyoda-ku, Tokyo 1000004 (JP)
(72) Inventor: SEKIGUCHI Takaaki, Hitachinaka-shi, Ibaraki 3128503 (JP); AMPO Keisuke, Hitachinaka-shi, Ibaraki 312-8503 (JP); AMAYA Shinichi, Hitachinaka-shi, Ibaraki 312-8503 (JP)
(74) Representative: MERH-IP Matias Erny Reichl Hoffmann Patentanwälte PartG mbB
(86) International application number: PCT/JP2024/017798
(87) International publication number: WO 2024/257534

(57) **Abstract**

A map processing device according to the present invention includes a map data prefetching unit that can acquire a plurality of types of map data including lane connectivity data indicating connectivity information between lane sections in an extending direction of a lane and lane group connectivity data indicating connectivity information between lane group sections in an extending direction of a lane group including one or more lanes, wherein when acquiring map data of a predetermined point in front of a host vehicle from the plurality of types of map data, the map data prefetching unit acquires the map data of a type according to a condition of the predetermined point.

## Description

### Technical Field

The present invention relates to a map processing device and a map processing method.

### Background Art

There has conventionally been disclosed a technology of prefetching map data in a map creation application used in an electronic map display system or the like (see, for example, Patent Literature 1). Patent Literature 1 discloses a technology of selecting a map data tile of a region including a first route and a region including a secondary route (return route or the like) selected based on the first route from all available map data and extracting map data. In the map data prefetching technology disclosed in Patent Literature 1, map data of the secondary route is prefetched based on the first route, but the amount of accessed map data is adjusted based on the priority of the secondary route.

### Citation List

### Patent Literature

Patent Literature 1: JP 2015-501956 A

### Summary of Invention

### Technical Problem

As described above, there has conventionally been proposed a technology of prefetching map data in a map processing device, and in this technical field, it is required to reduce the capacity of the storage that holds map data in the device to reduce the cost. To solve this problem, it is necessary to reduce the capacity of the map data held in the map processing device, but if the capacity of the held map data is excessively reduced, the performance of the map processing device may deteriorate. Thus, in the technical field of map processing devices, there is a demand for development of a technology capable of achieving both reduction in the capacity of the storage that holds map data in the device and maintenance of the performance of the device.

In particular, a map processing device that enables driving assistance at a traffic lane (hereinafter, simply referred to as "lane") level of a road necessary for autonomous driving of a vehicle, which has been developed in recent years, uses map data with a higher degree of detail than a conventional car navigation system that can be used in driving assistance at a road level. Thus, in such a map processing device that handles map data with a high degree of detail, the capacity of map data held in the device also increases, and thus the above-described demand is also large. For example, Patent Literature 1 discloses a technology of prefetching another route (secondary route) assumed from the host vehicle position and the route, but the secondary route tends to be a long distance on an expressway. Thus, for example, even though the technology disclosed in Patent Literature 1 is applied to a map processing device that handles map data with a high degree of detail, it is difficult to prefetch all map data of a secondary route required for driving assistance.

The present invention has been made to meet the above demand. An object of the present invention is to provide a technology capable of achieving both reduction in the capacity of the storage for holding map data in a map processing device used for driving assistance of a vehicle and maintenance of performance of the device.

### Solution to Problem

To solve the above problem, a map processing device of the present invention includes a map data prefetching unit capable of acquiring a plurality of types of map data. The plurality of types of map data include lane connectivity data indicating connectivity information between lane sections in an extending direction of a lane and lane group connectivity data indicating connectivity information between lane group sections in an extending direction of a lane group including one or more lanes. Then, when acquiring map data of a predetermined point in front of a host vehicle from the plurality of types of map data, the map data prefetching unit acquires map data of a type according to a condition of the predetermined point.

In addition, to solve the above problem, a map processing method of the present invention includes acquiring, when the map data prefetching unit of the present invention acquires map data of a predetermined point in front of the host vehicle from the plurality of types of map data, map data of a type according to a condition of the predetermined point.

### Advantageous Effects of Invention

According to the present invention having the configuration described above, in a map processing device used for driving assistance of a vehicle, both reduction in the capacity of the storage for holding map data in the device and maintenance of performance of the device can be achieved.

### Brief Description of Drawings

Fig. 1 is a schematic configuration diagram of an in-vehicle system including a map processing device according to an embodiment of the present invention.
Fig. 2 is a functional block configuration diagram of the map processing device according to the embodiment of the present invention.
Fig. 3 is a diagram illustrating a relationship between various types of map data stored in a storage unit of the map processing device according to the embodiment of the present invention and various applications in which various types of map data are used.
Fig. 4 is a configuration diagram of a hardware of the map processing device according to the embodiment of the present invention.
Fig. 5 is a schematic diagram illustrating a relationship between various types of map data to be prefetched in the map processing device according to the embodiment of the present invention and a distance from the host vehicle position to a prefetching target point.
Fig. 6 is a flowchart illustrating a procedure of prefetching processing of various types of map data performed by the map processing device according to the embodiment of the present invention.
Fig. 7 is a flowchart illustrating a procedure of prefetching execution processing for various types of map data performed by the map processing device according to the embodiment of the present invention.
Fig. 8 is a diagram for describing an outline of a first route change operation example when a route deviation has occurred, which is performed by the map processing device according to the embodiment of the present invention.
Fig. 9 is a diagram illustrating an operation flow of the first route change operation example when a route deviation has occurred, which is performed by the map processing device according to the embodiment of the present invention.
Fig. 10 is a diagram for describing an outline of a second route change operation example when a route deviation has occurred, which is performed by the map processing device according to the embodiment of the present invention.
Fig. 11 is a diagram illustrating an operation flow of the second route change operation when a route deviation has occurred, which is performed by the map processing device according to the embodiment of the present invention.

### Description of Embodiments

Hereinafter, a map processing device and a map processing method (map data prefetching method) according to an embodiment of the present invention will be specifically described with reference to the drawings. The present invention is applicable to, for example, an arithmetic device for vehicle control (for example, a map positioning unit (MPU)) with which an advanced driver assistance system (ADAS) or an in-vehicle electronic control unit (ECU) for autonomous driving (AD) can communicate.

### [Configuration of In-Vehicle System]

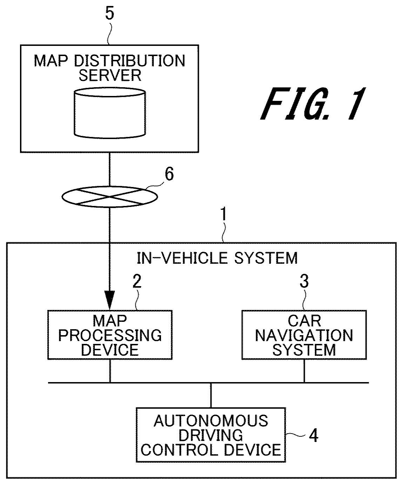

Fig. 1 is a schematic configuration diagram of an in-vehicle system including a map processing device according to an embodiment of the present invention. Fig. 1 illustrates only components related to various types of processing performed by the map processing device.

As illustrated in Fig. 1, an in-vehicle system 1 of a host vehicle having an autonomous driving function includes a map processing device 2, a car navigation system 3, and an autonomous driving control device 4. Each component is connected to each other in the in-vehicle system 1. The map processing device 2 is connected to a map distribution server 5 provided outside such as a cloud via a communication network 6.

The map distribution server 5 stores various types of map data (for example, lane connectivity data, lane attribute data, and lane boundary data described later: hereinafter, referred to as "high-precision map data") with high degree of detail at the lane level, which is required for the driving assistance of the host vehicle in autonomous driving. Then, during activation, the map processing device 2 acquires various types of high-precision map data around the host vehicle from the map distribution server 5 on demand. Although not illustrated, the car navigation system 3 is connected to a map distribution server for car navigation system provided outside, for example, in a cloud via a communication network, and acquires various types of map data at the road level around the host vehicle on demand from the map distribution server for car navigation system.

The map processing device 2 has a function of acquiring, from the map distribution server 5, various types of high-precision map data of a recommended route (hereinafter, also referred to as "scheduled travel route") to a destination required for autonomous driving assistance of the host vehicle and peripheral routes of the scheduled travel route in advance (hereinafter, referred to as "prefetching"). The "peripheral route of the scheduled travel route" herein means a route that can be branched from the scheduled travel route. Then, the map processing device 2 searches for a scheduled travel route using the various types of prefetched high-precision map data, and outputs information on the scheduled travel route determined by the search processing to the autonomous driving control device 4. In addition, in the present embodiment, as described later, the map processing device 2 performs processing for searching and determination for a new scheduled travel route using the various types of prefetched high-precision map data when the host vehicle has deviated from the scheduled travel route. The internal configuration and processing contents of the map processing device 2 will be described later with reference to the drawings.

The car navigation system 3 searches for a recommended route to a destination using various types of map data at the road level around the host vehicle acquired from the map distribution server for car navigation system and sets the recommended route obtained through the search processing as a scheduled travel route. In addition, the car navigation system 3 outputs various types of information such as the scheduled travel route, the destination, and the route search conditions set in the car navigation system 3 to the map processing device 2.

The autonomous driving control device 4 performs autonomous driving control of the host vehicle using information on the scheduled travel route to the destination set by the map processing device 2 or the car navigation system 3.

### [Configuration of Map Processing Device]

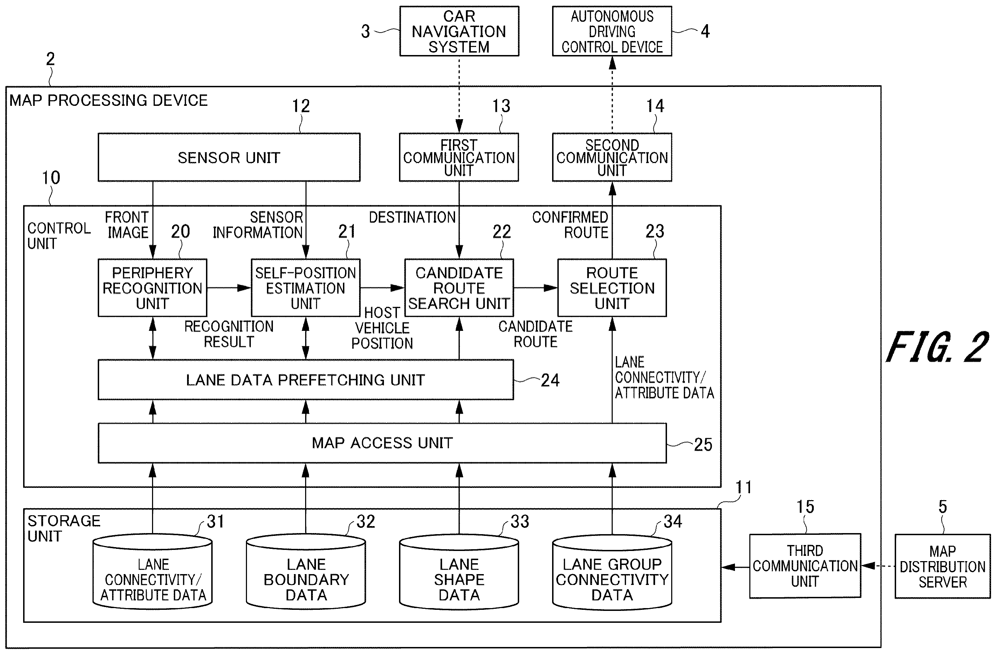

Fig. 2 is a functional block configuration diagram of the map processing device 2 according to the embodiment of the present invention. Fig. 2 illustrates only components related to the prefetching processing for various types of high-precision ground data performed by the map processing device 2 and the search and determination processing for the scheduled travel route to the destination.

As illustrated in Fig. 2, the map processing device 2 includes a control unit 10, a storage unit 11, a sensor unit 12, a first communication unit 13, a second communication unit 14, and a third communication unit 15. The control unit 10 is connected to the storage unit 11, the sensor unit 12, the first communication unit 13, and the second communication unit 14. The storage unit 11 is connected to the third communication unit 15.

The control unit 10 searches for a recommended route to the destination at the lane level using various types of data (information) acquired from the storage unit 11, the sensor unit 12, and the first communication unit 13, and outputs information on the scheduled travel route obtained as a result of the search to the autonomous driving control device 4 via the second communication unit 14. As described later, when the host vehicle has deviated from the scheduled travel route, the control unit 10 performs processing for searching and determining a new scheduled travel route. The internal configuration of the control unit 10 will be described later.

The storage unit 11 is connected to the map distribution server 5 provided outside via the third communication unit. Then, the storage unit 11 stores various types of high-precision map data that enable autonomous travel assistance at the lane level distributed from the map distribution server 5. In the present embodiment, it is assumed that the map distribution server 5 stores various types of high-precision map data that enable autonomous travel assistance at the lane level not only for expressways but also for general roads.

In addition, the storage unit 11 includes a lane connectivity/attribute data storage unit 31, a lane boundary data storage unit 32, a lane shape data storage unit 33, and a lane group connectivity data storage unit 34.

The lane connectivity/attribute data storage unit 31 stores information (hereinafter referred to as "lane connectivity data") related to a connectivity relationship between lane sections connected to each other via a branch point (for example, an intersection: hereinafter, referred to as "node") whose structure physically changes on the travel lane. The lane connectivity data includes, for example, not only the connectivity information between lane sections (between nodes) in the extending direction of the lane, but also various types of information such as information related to position coordinates of a node, lane identification information, a traveling direction, and information related to whether the lane can be changed at the node.

The lane connectivity/attribute data storage unit 31 stores information related to an attribute (property or feature) of each lane between nodes (hereinafter, referred to as "lane attribute data"). The lane attribute data includes various types of information between nodes, such as lane type information, lane width, lane curvature, lane gradient type, and information indicating whether the lane is passable. The information indicating whether the lane is passable included in the lane attribute data includes, for example, real-time or time-limited traffic information such as traffic jam information and construction information.

The lane boundary data storage unit 32 stores information related to a boundary between lanes adjacent in a direction orthogonal to the extending direction of the lanes (hereinafter, referred to as "lane boundary data"). The lane boundary data includes, for example, information such as a type (for example, a white line or an orange line) of a boundary line between lanes and a pattern type of the boundary line.

The lane shape data storage unit 33 stores information related to the shape of each lane between nodes (hereinafter, referred to as "lane shape data"). In the present embodiment, as the lane shape data, shape data of the center line of each lane (hereinafter referred to as "lane centerline shape data") and shape data of the boundary of each lane (hereinafter referred to as "lane boundary shape data") are separately provided. Both the lane centerline shape data and the lane boundary shape data are formed of point sequence data of coordinates.

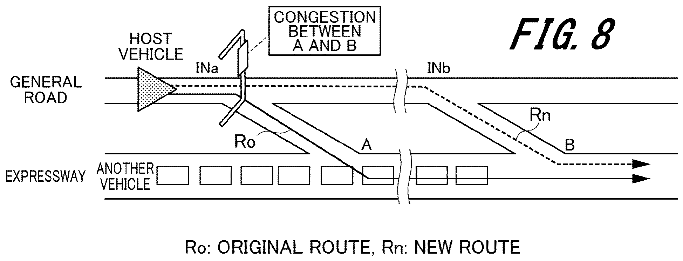

In addition, in the driving assistance of the autonomous driving performed by the map processing device 2, connectivity information of a group (hereinafter, referred to as a "lane group") obtained by collecting a plurality of lanes present between nodes into one group is used. In the present embodiment, the lane group is also set for the travel route (for example, a general road in Figs. 8 to 10 described later) when the number of lanes present between nodes is one. That is, in the present embodiment, the lane group includes one or more lanes. Then, the lane group connectivity data storage unit 34 stores information (hereinafter referred to as "lane group connectivity data") related to connectivity between the lane groups connected to each other via a node. The lane group connectivity data only needs to include minimum connectivity information between lane groups, and includes, for example, various types of information such as lane group identification information other than the connectivity information between lane groups (between nodes) in the extending direction of the lane group.

The sensor unit 12 includes various devices for recognizing structures and vehicles around the host vehicle, the host vehicle position, the traveling circumstances of the host vehicle, and the like. Specifically, the sensor unit 12 includes various devices such as a camera (imaging device) capable of imaging the circumstances around the host vehicle, a global positioning system (GPS) module capable of measuring the host vehicle position at the road level, and an acceleration sensor and an angular velocity sensor capable of measuring the traveling circumstances of the host vehicle. Various types of information acquired by the sensor unit 12 are input to the control unit 10, and the control unit 10 performs recognition processing of a structure or a vehicle around the host vehicle and processing for estimating the own position based on these types of information.

The first communication unit 13 is connected to the car navigation system 3. Then, various types of information such as the scheduled travel route, the destination, and the route search conditions set in the car navigation system 3 are transmitted to the control unit 10 via the first communication unit 13. The second communication unit 14 is connected to the autonomous driving control device 4. Then, information on the scheduled travel route to the destination determined by the control unit 10 is transmitted to the autonomous driving control device 4 via the second communication unit 14. The third communication unit 15 is connected to the map distribution server 5 provided outside via the communication network 6, receives various types of high-precision map data distributed from the map distribution server 5, and outputs the received various types of high-precision map data to the storage unit 11. The operations of the first communication unit 13 to the third communication unit 15 are controlled by the control unit 10.

### [Configuration of Control Unit]

As illustrated in Fig. 2, the control unit 10 functionally includes a periphery recognition unit 20, a self-position estimation unit 21, a candidate route search unit 22 (route search unit), a route selection unit 23 (route determination unit), a lane data prefetching unit 24 (map data prefetching unit), and a map access unit 25.

The connectivity relationship in functional processing between the functional blocks is as follows. The periphery recognition unit 20 is connected to the sensor unit 12, the self-position estimation unit 21, and the lane data prefetching unit 24. The self-position estimation unit 21 is connected to the sensor unit 12, the candidate route search unit 22, and the lane data prefetching unit 24. The candidate route search unit 22 is connected to the first communication unit 13, the route selection unit 23, and the lane data prefetching unit 24. The route selection unit 23 is connected to the second communication unit 14 and the map access unit 25. The lane data prefetching unit 24 is connected to the map access unit 25. The map access unit 25 is connected to each of the lane connectivity/attribute data storage unit 31, the lane boundary data storage unit 32, the lane shape data storage unit 33, and the lane group connectivity data storage unit 34 in the storage unit 11.

The periphery recognition unit 20 recognizes the presence or absence, the position, and the like of structures and vehicles in the periphery in front of the host vehicle based on a peripheral image in front of the host vehicle input from a camera (not illustrated) in the sensor unit 12 and the various types of high-precision map data input from the lane data prefetching unit 24. Then, the periphery recognition unit 20 outputs a recognition result about structures and vehicles around the host vehicle to the self-position estimation unit 21 and the lane data prefetching unit 24.

The self-position estimation unit 21 estimates the host vehicle position at the lane level based on the recognition result of the structure and the vehicle around the host vehicle input from the periphery recognition unit 20, various types of sensor information input from the sensor unit 12, and various types of high-precision map data input from the lane data prefetching unit 24.

In the present embodiment, two types of applications are installed as applications for estimating the host vehicle position performed by the self-position estimation unit 21. Specifically, an application for estimating the host vehicle position using a peripheral image in front of the host vehicle and high-precision map data and an application for estimating the host vehicle position using high-precision map data are installed. Hereinafter, the former application is referred to as "high-precision locator (camera recognition)", and the latter application is referred to as "high-precision locator (map matching)".

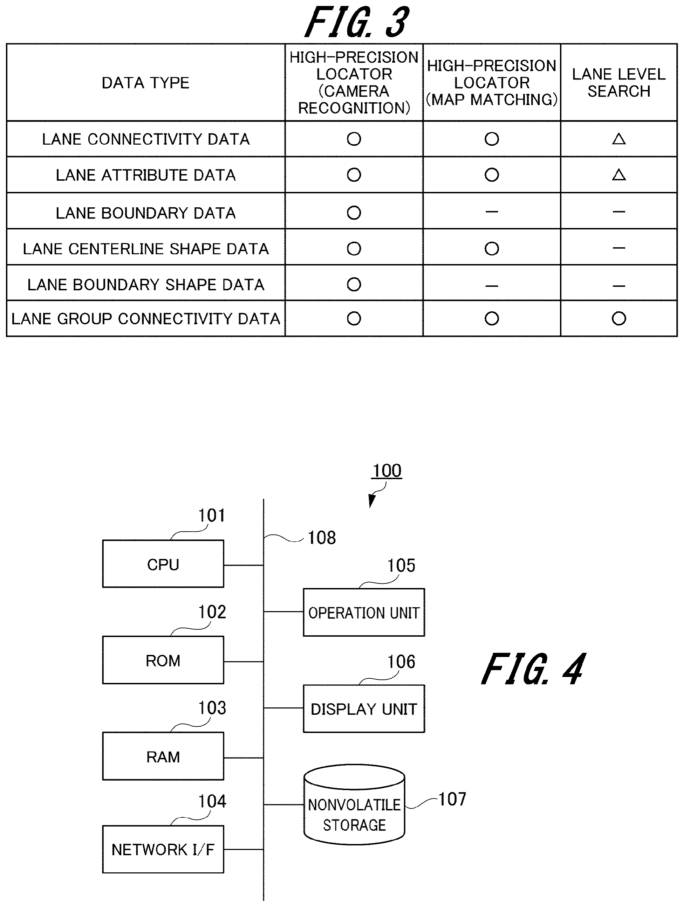

In the present embodiment, the type of the high-precision map data used in the processing of estimating the host vehicle position performed by the self-position estimation unit 21 also changes according to the application for estimating the host vehicle position to be used. Fig. 3 is a diagram illustrating a relationship between the type of application for estimating the host vehicle position and the type of high-precision map data to be used. The high-precision map data to be used is indicated by a circle. Fig. 3 also illustrates the high-precision map data used in the processing of searching for a candidate route to be described later performed by the candidate route search unit 22 and the processing of determining a scheduled travel route to be described later performed by the route selection unit 23 (see the column "Lane level search" in the figure). In the figure, the high-precision map data used in the processing of searching for a candidate route to be described later performed by the candidate route search unit 22 is indicated by a circle, and the high-precision map data used in the processing of determining a scheduled travel route to be described later performed by the route selection unit 23 is indicated by a triangle.

As illustrated in Fig. 3, the high-precision map data used in the high-precision locator (camera recognition) is lane connectivity data, lane attribute data, lane boundary data, lane centerline shape data, lane boundary shape data, and lane group connectivity data. That is, in the high-precision locator (camera recognition), all types of high-precision map data stored in the storage unit 11 are used. On the other hand, the high-precision map data used in the high-precision locator (map matching) is lane connectivity data, lane attribute data, lane centerline shape data, and lane group connectivity data. That is, the high-precision map data used in the high-precision locator (map matching) does not include the high-precision map data related to the boundary of the lane.

Then, the self-position estimation unit 21 outputs information on the host vehicle position estimated by the high-precision locator (camera recognition) or the high-precision locator (map matching) to the candidate route search unit 22 and the lane data prefetching unit 24.

The candidate route search unit 22 searches for a candidate (hereinafter, referred to as "candidate route") that can be a recommended route to the set destination. At this time, the candidate route search unit 22 searches for a plurality of candidate routes based on the host vehicle position input from the self-position estimation unit 21, various types of high-precision map data input from the lane data prefetching unit 24, and destination information (position information and the like) input from the car navigation system 3. As will be described later, when the host vehicle has deviated from the scheduled travel route that has been set, the candidate route search unit 22 performs processing of searching for a candidate route using only the lane group connectivity data as the high-precision map data (see the circle in the column "LANE LEVEL SEARCH" in Fig. 3). Then, the candidate route search unit 22 outputs information on a plurality of candidate routes obtained through the search processing to the route selection unit 23.

The route selection unit 23 selects (determines) a scheduled travel route from among the plurality of candidate routes input from the candidate route search unit 22 based on the lane connectivity data and the lane attribute data input via the map access unit 25 (see the triangles in the column "LANE LEVEL SEARCH" in Fig. 3). In the processing of selecting a scheduled travel route performed by the route selection unit 23, candidate routes are picked up in a predetermined order for a plurality of candidate routes, and whether the candidate routes that have been picked up are actually suitable for autonomous travel is determined based on the lane attribute data of the candidate routes. Then, when the candidate route that has been picked up is a route suitable for autonomous travel (travelable route), the route selection unit 23 determines the candidate route that has been picked up as the scheduled travel route. Thereafter, the route selection unit 23 transmits information on the selected scheduled travel route ("CONFIRMED ROUTE" in the drawing) to the autonomous driving control device 4 via the second communication unit 14.

In the processing of selecting a scheduled travel route performed by the route selection unit 23, one order is set in advance by the driver or the like from the pickup order (selection order) of a plurality of types of candidate routes as follows.
(1) In ascending order of reading amount of high-precision map data
(2) In ascending order of distance of candidate route
(3) In ascending order of required time to destination
(4) Order considering search condition of first scheduled travel route set in car navigation system 3 or the like

In the pickup order of (1), the capacity of map data to be read is not known in advance, and thus, candidate routes are picked up in ascending order of the number of lane groups (the number of nodes) to be newly read. In the pickup order of (2), it is necessary to include information on the lane group distance (inter-node distance) in the lane group connectivity data. In the pickup order of (3), it is necessary to include information on the average speed in the lane group connectivity data and associate the lane group connectivity data with traffic information. In the pickup order of (4), the pickup order of the candidate routes according to the search conditions in the car navigation system 3, such as the expressway use and the arrival time, acquired via the first communication unit 13 or the like, is set. However, in the processing of selecting a scheduled travel route performed by the route selection unit 23, candidate routes for which the distance to the lane group or the next node (branch point) of the lane is short and the high-precision map data cannot be read in time are excluded.

The lane data prefetching unit 24 prefetches (acquires), from the map distribution server 5, a plurality of types of high-precision map data of a scheduled travel route in front of the host vehicle and a peripheral route thereof necessary for smoothly performing autonomous driving assistance of the host vehicle. Specifically, the lane data prefetching unit 24 selects a tile (hereinafter referred to as "map tile") including the area of the scheduled travel route and/or the peripheral route thereof from a map sectioned in tiles and prefetches various types of high-precision map data of the road included in the map tile. At this time, the type of the high-precision map data to be prefetched changes according to the conditions of a prefetching target point (predetermined point) in front of the host vehicle. Specifically, for example, the type of the high-precision map data to be prefetched changes according to the conditions such as the distance on the travel route from the host vehicle position to the prefetching target point, whether the prefetching target point is a point on the scheduled travel route, and the possibility of deviation from the scheduled travel route (easiness of going to the secondary route). Specific contents of the prefetching processing performed by the lane data prefetching unit 24 will be described later in detail with reference to the drawings.

The map access unit 25 accesses the storage unit 11, acquires various types of high-precision map data stored in the storage unit 11, and outputs the acquired various types of high-precision map data to the lane data prefetching unit 24 and the route selection unit 23. The high-precision map data of the type according to the conditions of the prefetching target point described above is output from the map access unit 25 to the lane data prefetching unit 24, and the lane connectivity data and the lane attribute data of the candidate route are output from the map access unit 25 to the route selection unit 23. As described above, in the present embodiment, the route selection unit 23 determines the scheduled travel route based on the lane attribute data. Thus, the high-precision map data input from the map access unit 25 to the route selection unit 23 may be only the lane attribute data of the candidate route.

### [Hardware Configuration of Map Processing Device]

The map processing device 2 of the present embodiment can be configured by an arithmetic processing device such as a computer device having an arithmetic function and a communication function. Fig. 4 is a block diagram illustrating an example of a hardware configuration of an arithmetic processing device 100 applicable as the map processing device 2.

The arithmetic processing device 100 includes a central processing unit (CPU) 101, a read only memory (ROM) 102, and a random access memory (RAM) 103 connected to a bus line 108. The arithmetic processing device 100 also includes a network interface (I/F) 104 connected to the bus line 108, an operation unit 105, a display unit 106, and a nonvolatile storage 107. Although not illustrated in Fig. 4, the arithmetic processing device 100 also includes various interfaces used when input/output processing of various types of data (various types of information) is executed with an external device. Further, although not illustrated in Fig. 4, the arithmetic processing device 100 also includes a component corresponding to the sensor unit 12 in Fig. 2.

The CPU 101 reads a program code of software for implementing various processing functions included in the map processing device 2 from the ROM 102 to the RAM 103 and executes the program code. At this time, variables, parameters, and the like generated during the arithmetic processing are also temporarily written in the RAM 103. That is, the control unit 10 included in the map processing device 2 in Fig. 2 is included in the CPU 101.

The network I/F 104 is formed of, for example, a network interface card (NIC) or the like, and transmits and receives various types of data to and from each connected device.

The operation unit 105 includes, for example, a key, a button, and the like, generates an operation signal corresponding to the operation content input by the operator, and supplies the operation signal to the CPU 101. For example, the setting of the pickup order of the candidate routes in processing of selecting the scheduled travel route performed by the route selection unit 23 described above can be performed by operating the operation unit 105. Such an operation may be performed via an operation unit (not illustrated) included in the car navigation system 3. In such a case, the map processing device 2 does not include the operation unit 105.

The display unit 106 is formed of, for example, a liquid crystal panel or the like, and displays characters, images, and the like on a screen. The display unit 106 may be formed of a touch panel, and in such a case, the display unit 106 and the operation unit 105 are integrally formed. The output information from the map processing device 2 may be displayed on, for example, a display unit (not illustrated) provided for displaying various types of information output from the car navigation system 3 or the like. In such a case, the map processing device 2 does not include the display unit 106.

The nonvolatile storage 107 can be formed of, for example, a hard disk drive (HDD), a solid state drive (SSD), a flexible disk, an optical disk, a magneto-optical disk, a CD-ROM, a CD-R, a magnetic tape, a nonvolatile memory, or the like. The nonvolatile storage 107 stores, in addition to an operating system (OS) and various parameters, a program for causing the arithmetic processing device 100 to function as the map processing device 2. In addition, in the present embodiment, the nonvolatile storage 107 stores the above-described various types of high-precision map data, and the nonvolatile storage 107 includes the storage unit 11 included in the map processing device 2 in Fig. 2. The information (data) such as a program, a table, and a file that implement each function included in the map processing device 2 may be stored in, for example, a recording medium such as an IC card, an SD card, or a DVD, in addition to the ROM 102 and the nonvolatile storage 107.

### [Outline of Function of Prefetching High-Precision Map Data]

In the present embodiment, a function of prefetching high-precision map data with the lane data prefetching unit 24 as in the following (A) to (C) is provided.
(A) When the prefetching target point is a point on the scheduled travel route, the lane data prefetching unit 24 changes the type of the high-precision map data to be prefetched (acquired) according to the distance on the travel route from the host vehicle position to the prefetching target point.
(B) When the prefetching target point is a point on a peripheral route that can branch from the scheduled travel route, the lane data prefetching unit 24 prefetches only the lane group connectivity data.
(C) The lane data prefetching unit 24 prefetches not only the lane group connectivity data but also various types of high-precision map data necessary for autonomous driving assistance such as lane connectivity data with respect to a point within a range of a predetermined distance from the deviation point on the route where the vehicle can travel deviating from the scheduled travel route. At this time, the high-precision map data to be prefetched may be, for example, all types of high-precision map data illustrated in Fig. 3, or may be high-precision map data other than the high-precision map data related to the boundary of the lane.

In the map processing device 2 of the present embodiment, a configuration example including all the prefetching functions (A) to (C) will be described, but the present invention is not limited to this configuration. For example, there may be a configuration in which the prefetching function (hereinafter referred to as "deviation prediction function") of (C) is not provided according to, for example, the processing performance, the memory capacity, and the like of the map processing device 2. In addition, for example, one of the above-described prefetching functions of (A) and (B) may be provided. When only the prefetching function of (A) is provided, the type of high-precision map data to be prefetched at the prefetching target point on the peripheral route also changes according to the distance on the travel route from the host vehicle position to the prefetching target point. When only the prefetching function of (B) is provided, not only the lane group connectivity data but also various types of high-precision map data necessary for autonomous driving assistance such as lane connectivity data are prefetched at the prefetching target point on the scheduled travel route regardless of the distance from the host vehicle position.

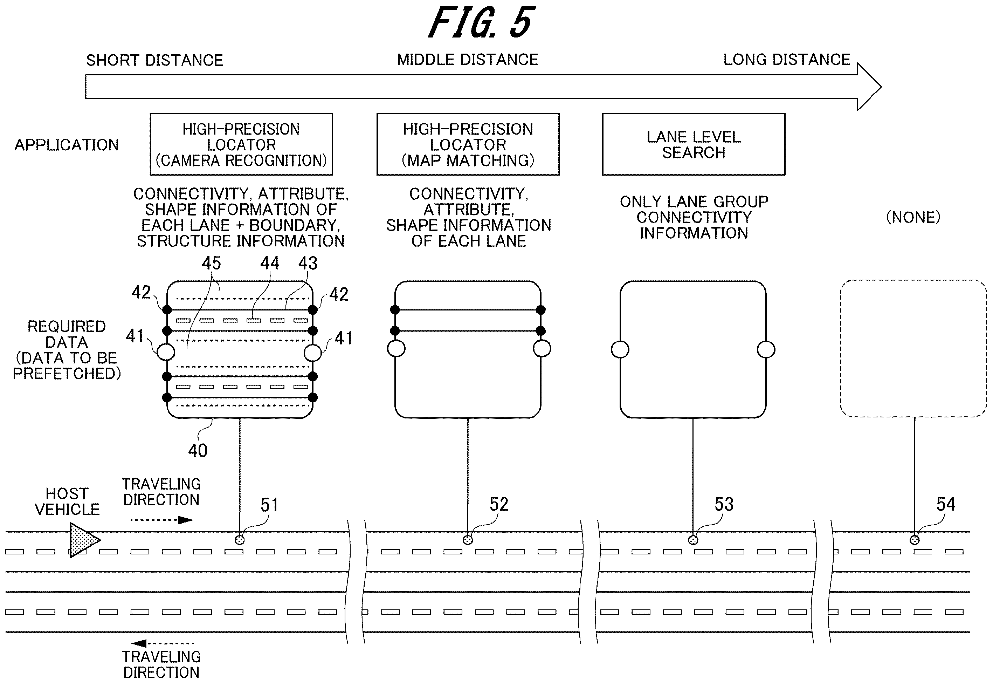

Here, the contents of the prefetching function of (A) will be specifically described. Fig. 5 is a schematic diagram illustrating the relationship between the type of the high-precision map data to be prefetched at the lane data prefetching unit 24 and the distance on the travel route from the host vehicle position to the prefetching target point in the prefetching function of (A) (when the prefetching target point is a point on the scheduled travel route). Fig. 5 illustrates a road with two lanes on each side. Thus, in the example illustrated in Fig. 5, four lanes are collected to form one lane group.

In the example illustrated in Fig. 5, one lane group area 40, that is, one lane group section is denoted by a substantially rectangular block. The lane group connectivity data 41 is denoted by a node (branch point) with a white circle, and is provided at each of an entry point and an exit point of each lane group area 40. The lane connectivity data 42 is denoted by a node (branch point) with a black circle, and is provided at corresponding entry point and an exit point of each lane group area 40. The lane attribute/shape data 43 (lane attribute data and lane centerline shape data) is denoted by a solid line (link) connecting nodes of the lane connectivity data 42. In addition, the map data 44 (lane boundary data and lane boundary shape data) related to the boundaries of the lanes is denoted by a pattern (white line pattern) in which outlined rectangles are disposed at predetermined intervals along the extending direction of the road. The map data 44 related to the boundary of the lane includes, for example, a line indicating the boundary with the side wall, data of the side wall itself, and the like in addition to the illustrated white line pattern.

When the prefetching target point is a point 51 located at a short distance (for example, several kilometers ahead) from the host vehicle position, as illustrated in Fig. 5, the lane data prefetching unit 24 acquires various types of high-precision map data to be used in the processing of estimating the host vehicle position performed by the high-precision locator (camera recognition). Specifically, in the prefetching for the short distance point 51, the lane data prefetching unit 24 prefetches (acquires) the lane group connectivity data 41, the lane connectivity data 42, the lane attribute/shape data 43, and the map data 44 related to the lane boundary. That is, in the prefetching for the short distance point 51, the lane data prefetching unit 24 acquires all types of high-precision map data illustrated in Fig. 3. In the prefetching for the short distance point 51, the lane data prefetching unit 24 also acquires a peripheral image in front of the host vehicle captured by the camera in the sensor unit 12, thereby acquiring information related to a physical structure 45 and the vehicle present in the periphery in front of the host vehicle.

Fig. 5 illustrates an example in which not only the high-precision map data for two lanes in the traveling direction of the host vehicle but also the high-precision map data for two lanes in the opposite traveling direction are prefetched (acquired) by the lane data prefetching unit 24 in the prefetching for the short distance point 51, but the present invention is not limited to this configuration. In the prefetching for the short distance point 51, for example, when there is the physical structure 45 in the periphery in front of the host vehicle, the lane data prefetching unit 24 may prefetch the high-precision map data of only the range visible from the host vehicle (for example, the range appearing in the peripheral image). For example, when a center divider is provided as the physical structure 45 between two lanes in the traveling direction of the host vehicle and the opposite lane, and the opposite lane cannot be seen from the host vehicle, the lane data prefetching unit 24 may prefetch only high-precision map data for two lanes in the traveling direction of the host vehicle. In this case, it is not necessary to read the high-precision map data of the opposite lane, and thus the capacity of the high-precision map data to be acquired can be further reduced.

When the prefetching target point is a point 52 located at a middle distance from the host vehicle position, the lane data prefetching unit 24 acquires various types of high-precision map data to be used in the processing of estimating the host vehicle position performed by the high-precision locator (map matching). Specifically, in the prefetching for the middle distance point 52, the lane data prefetching unit 24 prefetches (acquires) the lane group connectivity data 41, the lane connectivity data 42, and the lane attribute/shape data 43. In the prefetching for the middle distance point 52, the lane data prefetching unit 24 acquires only high-precision map data for two lanes in the traveling direction of the host vehicle.

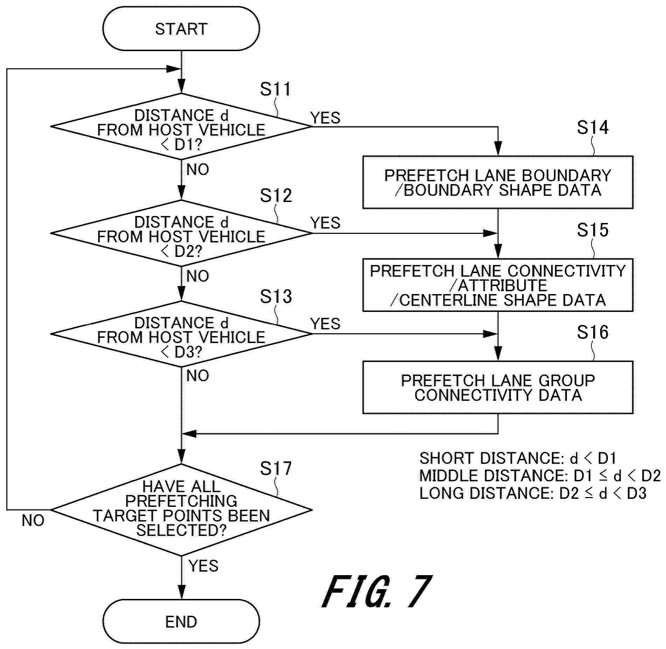

When the prefetching target point is a point 53 located at a long distance from the host vehicle position, the lane data prefetching unit 24 prefetches (acquires) only the lane group connectivity data 41. When the prefetching target point is a point 54 farther than the point 53, the lane data prefetching unit 24 does not prefetch (acquire) high-precision map data. The boundary values of the "short distance", "middle distance", and "long distance" described above, the boundary values of distances for which the high-precision map data is not prefetched, and the like (first predetermined distance D1 to third predetermined distance D3 in Fig. 7 to be described later) can be appropriately set according to, for example, the type of travel route (general road, expressway, etc.), the processing performance of the map processing device 2, the memory capacity, and the like.

### [High-Precision Map Data Prefetching Processing Performed by Map Processing Device]

Next, a processing flow of the high-precision map data prefetching processing executed by the lane data prefetching unit 24 of the map processing device 2 will be described. The prefetching processing performed by the lane data prefetching unit 24 described below is controlled by the CPU 101 in Fig. 4.

In the prefetching processing performed by the lane data prefetching unit 24 described below, the prefetching processing performed when the prefetching target point is on the schedule travel route and when the point is on a peripheral route of the scheduled travel route, that is, the prefetching functions of (A) and (B) will be described. The outline of the deviation prediction function of (C) in consideration of the possibility of deviation from the schedule travel route will be appropriately described in the following description of the processing flow.

### <Processing Flow of Entire High-Precision Map Data Prefetching Processing>

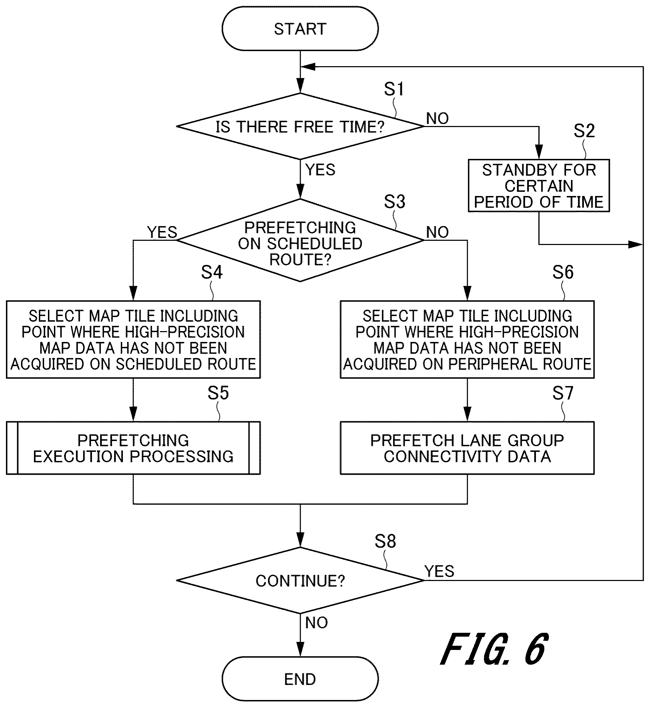

First, a processing flow of the entire high-precision map data prefetching processing executed by the lane data prefetching unit 24 will be described with reference to Fig. 6. Fig. 6 is a flowchart illustrating a processing procedure of the entire high-precision map data prefetching processing executed by the lane data prefetching unit 24. The entire processing of the high-precision map data prefetching processing illustrated in Fig. 6 is started when the map processing device 2 is activated (powered on).

First, the lane data prefetching unit 24 determines whether there is free time for performing the prefetching processing (S1). In this processing, the lane data prefetching unit 24 determines whether the CPU 101 has a time during which the map data prefetching processing can be performed, that is, whether the processing load of the CPU 101 has a margin, based on the current processing load of the CPU 101. For example, when the host vehicle has deviated from the scheduled travel route, and search processing or the like for a new route to the destination (for example, the operation described in Figs. 8 to 11 described later) is being performed, the processing load of the CPU 101 for the search processing for a route increases, and thus there is no room for performing the prefetching processing. Thus, in such a situation, there is no free time for performing the prefetching processing, the determination processing of S1 is determined as NO, and the processing of S3 and subsequent processing (prefetching processing) to be described later are not performed.

In S1, when the lane data prefetching unit 24 has determined that there is no free time for performing the prefetching processing (NO in S1), the lane data prefetching unit 24 performs standby processing for a certain period of time (S2). Then, after the processing of S2, the lane data prefetching unit 24 returns the processing to the processing of S1 and repeats the processing of S1 and subsequent processing.

On the other hand, in S1, when the lane data prefetching unit 24 has determined that there is a free time for performing the prefetching processing (YES in S1), the lane data prefetching unit 24 determines whether to perform prefetching processing on the scheduled travel route (S3). In this processing, when a point where the prefetching processing has not been performed remains on the scheduled travel route to the destination at the time of this processing, the lane data prefetching unit 24 determines to perform the prefetching processing on the scheduled travel route (YES determination). On the other hand, in this processing, when there is no point where the prefetching processing has not been performed remaining on the scheduled travel route to the destination at the time of this processing, the lane data prefetching unit 24 determines not to perform the prefetching processing on the scheduled travel route (NO determination).

In S3, when the lane data prefetching unit 24 has determined to perform the prefetching processing on the scheduled travel route (YES in S3), the lane data prefetching unit 24 acquires a map tile including a point where the high-precision map data has not been acquired on the scheduled travel route (S4). That is, in this processing, the lane data prefetching unit 24 acquires a map tile including the prefetching target point where the prefetching processing has not been performed on the scheduled travel route.

Next, the lane data prefetching unit 24 performs high-precision map data prefetching execution processing (S5). In this processing, the lane data prefetching unit 24 prefetches (acquires), from the map distribution server 5, the high-precision map data at each prefetching target point on the scheduled travel route included in the map tile acquired in the processing of S4. At this time, as described with reference to Fig. 5, the type of the high-precision map data prefetched by the lane data prefetching unit 24 varies depending on the distance on the travel route from the host vehicle position to the prefetching target point. Details of the map data prefetching execution processing in S5 will be described later with reference to Fig. 7 described later.

On the other hand, in S3, when the lane data prefetching unit 24 has determined not to perform the prefetching processing on the scheduled travel route (NO in S3), the lane data prefetching unit 24 acquires a map tile including a point where the high-precision map data has not been acquired on a peripheral route of the scheduled travel route (S6). That is, in this processing, the lane data prefetching unit 24 acquires a map tile including the prefetching target point where the prefetching processing has not been performed on the peripheral route of the scheduled travel route. At this time, the lane data prefetching unit 24 acquires a map tile closest to the host vehicle position.

Next, the lane data prefetching unit 24 performs lane group connectivity data prefetching processing (S7). In this processing, the lane data prefetching unit 24 prefetches (acquires), from the map distribution server 5, the lane group connectivity data of each prefetching target point on the peripheral route of the scheduled travel route included in the map tile acquired in the processing of S6. When the deviation prediction function is provided, in the processing of S7, not only the lane group connectivity data but also various types of high-precision map data necessary for autonomous driving assistance such as lane connectivity data are prefetched (acquired) for points on the peripheral route within a range of a predetermined distance from the deviation point.

After the processing of S5 or S7, the lane data prefetching unit 24 determines whether to continue the high-precision map data prefetching processing (S8). In this processing, the lane data prefetching unit 24 determines whether the power of the map processing device 2 has been turned off, and when the power of the map processing device 2 has not been turned off, the lane data prefetching unit continues the high-precision map data prefetching processing, and thus the determination processing of S8 results in YES determination. On the other hand, when the power of the map processing device 2 is turned off, the determination processing of S7 results in NO determination.

In S8, when the lane data prefetching unit 24 determines to continue the high-precision map data prefetching processing (YES in S8), the lane data prefetching unit 24 returns the processing to the processing of S1 and repeats the processing of S1 and subsequent processing. On the other hand, when the lane data prefetching unit 24 determines not to continue the high-precision map data prefetching processing in S8 (NO in S8: when the power is turned off), the lane data prefetching unit 24 ends the high-precision map data prefetching processing.

### <Processing Flow of High-Precision Map Data Prefetching Execution Processing (processing of S5)>

Next, a processing flow of the prefetching execution processing performed in S5 in the processing flow of the entire high-precision map data prefetching processing illustrated in Fig. 6 will be described with reference to Fig. 7. Fig. 7 is a flowchart illustrating a procedure of high-precision map data prefetching execution processing performed in S5.

First, the lane data prefetching unit 24 determines whether a distance d from the host vehicle position of a predetermined prefetching target point on the scheduled travel route included in the acquired map tile is less than a first predetermined distance D1 (S11). Here, the "distance d of the predetermined prefetching target point from the host vehicle position" is a distance on the scheduled travel route from the host vehicle position to the predetermined prefetching target point. The "first predetermined distance D1" mentioned here is a threshold for determining whether the distance d of a predetermined prefetching target point from the host vehicle position is a short distance.

In S11, when the lane data prefetching unit 24 has determined that the distance d of the predetermined prefetching target point from the host vehicle position is less than the first predetermined distance D1 (YES determination in S11), the lane data prefetching unit 24 performs processing of S14 to be described later. On the other hand, in S11, when the lane data prefetching unit 24 has determined that the distance d of the predetermined prefetching target point from the host vehicle position is not less than the first predetermined distance D1 (NO determination in S11), the lane data prefetching unit 24 determines whether the distance d of the predetermined prefetching target point from the host vehicle position is less than a second predetermined distance D2 (S12). The "second predetermined distance D2" mentioned here is a threshold for determining whether the distance d of a predetermined prefetching target point from the host vehicle position is a middle distance.

In S12, when the lane data prefetching unit 24 has determined that the distance d of the predetermined prefetching target point from the host vehicle position is less than the second predetermined distance D2 (YES determination in S12), the lane data prefetching unit 24 performs processing of S15 to be described later. On the other hand, in S12, when the lane data prefetching unit 24 has determined that the distance d of the predetermined prefetching target point from the host vehicle position is not less than the second predetermined distance D2 (NO determination in S12), the lane data prefetching unit 24 determines whether the distance d of the predetermined prefetching target point from the host vehicle position is less than a third predetermined distance D3 (S13). The "third predetermined distance D3" mentioned here is a threshold for determining whether the distance d of a predetermined prefetching target point from the host vehicle position is a long distance.

In S13, when the lane data prefetching unit 24 has determined that the distance d of the predetermined prefetching target point from the host vehicle position is less than the third predetermined distance D3 (YES determination in S13), the lane data prefetching unit 24 performs processing of S16 to be described later. On the other hand, in S13, when the lane data prefetching unit 24 has determined that the distance d of the predetermined prefetching target point from the host vehicle position is not less than the third predetermined distance D3 (NO determination in S13), the lane data prefetching unit 24 performs processing of S17 to be described later.

Here, returning to the description of the processing of S11 again, when S11 has resulted in YES determination, that is, when the distance d of the predetermined prefetching target point from the host vehicle position is a short distance, the lane data prefetching unit 24 performs lane boundary/boundary shape data prefetching processing (S14). Specifically, the lane data prefetching unit 24 prefetches (acquires) the lane boundary data and the lane boundary shape data at the predetermined prefetching target point.

After the processing of S14 or when S12 has resulted in YES determination, (when the distance d of the predetermined prefetching target point from the host vehicle position is a middle distance), the lane data prefetching unit 24 performs lane connectivity/attribute/centerline shape data prefetching processing (S15). Specifically, the lane data prefetching unit 24 prefetches (acquires) the lane connectivity data, lane attribute data, and lane centerline shape data at the predetermined prefetching target point.

After the processing of S15 or when S13 has resulted in YES determination, (when the distance d of the predetermined prefetching target point from the host vehicle position is a long distance), the lane data prefetching unit 24 performs lane prefetching processing for the lane group connectivity data of the predetermined prefetching target point (S16).

After the processing of S16 or when S13 has resulted in NO determination, the lane data prefetching unit 24 determines whether all the prefetching target points included in the acquired map tile have been selected (S17).

In S17, when the lane data prefetching unit 24 has determined that not all the prefetching target points have been selected (NO determination in S17), the lane data prefetching unit 24 returns the processing to the processing of S11 and repeats the processing of S11 and subsequent processing. At this time, the lane data prefetching unit 24 newly selects a prefetching target point for which the prefetching processing has not been performed as a predetermined prefetching target point, and repeats the processing of S11 and subsequent processing.

On the other hand, in S17, when the lane data prefetching unit 24 has determined that all the prefetching target points have been selected (YES determination in S17), the lane data prefetching unit 24 ends the prefetching execution processing and transfers the processing to S8 in the prefetching processing (see Fig. 6).

As described above, in the prefetching execution processing on the scheduled travel route performed by the lane data prefetching unit 24, when the distance d of the prefetching target point from the host vehicle position is a short distance (d < D1: distance within predetermined range), the prefetching processing of S14 to S16 described above is performed, and all types of the high-precision map data are prefetched. In the prefetching execution processing on the scheduled travel route, when the distance d of the prefetching target point from the host vehicle position is a middle distance (D1 ≤ d < D2), the prefetching processing of S15 to S16 described above is performed, and the high-precision map data other than data related to lane boundary is prefetched. In the prefetching execution processing on the scheduled travel route, when the distance d of the prefetching target point from the host vehicle position is a long distance (D2 ≤ d < D3), the prefetching processing of S16 is performed, and only the lane group connectivity data is prefetched. In the prefetching execution processing of the present embodiment described above, when the distance d of the prefetching target point from the host vehicle position is equal to or more than the third predetermined distance D3, the prefetching processing of S14 to S16 described above is not performed even on the scheduled travel route, and the high-precision map data is not prefetched (acquired).

### [Route Change Operation Performed by Map Processing Device When Route Deviation Has Occurred]

Next, in the map processing device 2 of the present embodiment, an operation of changing the route to the destination (scheduled travel route) performed when the host vehicle has deviated from the scheduled travel route will be described. The route change operation at the time of route deviation is performed by the candidate route search unit 22 and the route selection unit 23 in the map processing device 2, and the processing operation is controlled by the CPU 101 in Fig. 4.

### <Example of First Route Change Operation>

Fig. 8 is a diagram illustrating an outline of a situation when a route deviation has occurred when the host vehicle enters an expressway from a general road, and a first route change operation performed by the map processing device 2 when the situation has occurred. In the example of the first route change operation, a case where the following route deviation situation has occurred will be considered.

First, it is assumed that the scheduled travel route (hereinafter, referred to as "original route Ro") of the host vehicle during autonomous driving set in advance by the car navigation system 3 is a route (solid arrow in the drawing) from an entry point INa from a general road to an expressway toward a junction point A with the expressway. It is also assumed that, before the host vehicle in autonomous driving reaches the entry point INa, the driver sees a display that displays a congestion status of an expressway provided on a general road or hears a guidance voice of the car navigation system 3, and grasps that the section from the junction point A to the next junction point B is congested on the expressway. Then, a case is considered where the driver has determined that the original route Ro of turning right at the entry point INa is not good, steers suddenly (switches to manual driving), and goes straight without turning right at the entry point INa. When such route deviation has occurred, after the route deviation, the map processing device 2 searches for a new scheduled travel route (hereinafter, referred to as "new route Rn") to the destination using prefetched lane group connectivity data. Then, in the example illustrated in Fig. 8, after the route deviation, a return route (dashed arrow in the drawing) to the expressway from the entry point INb toward the junction point B with the expressway is determined as the new route Rn.

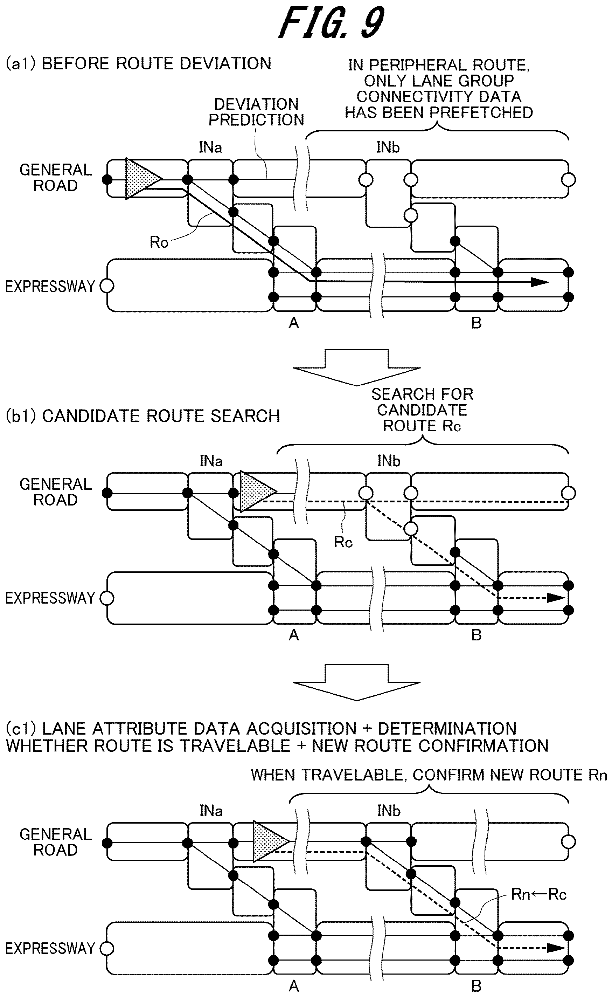

Here, details of the first route change operation performed by the map processing device 2 when the route deviation situation illustrated in Fig. 8 has occurred, that is, the route return operation to the expressway will be described in more detail with reference to Fig. 9. Fig. 9 is a diagram illustrating a relationship between the flow (situation) of the route change operation performed by the map processing device 2 when the route deviation situation illustrated in Fig. 8 has occurred and the prefetched high-precision map data and the acquired high-precision map data in each situation of the route change operation.

In Fig. 9, similarly to Fig. 5, one lane group area is denoted by a substantially rectangular block, lane group connectivity data is denoted by a node (branch point) with a white circle, and lane connectivity data is denoted by a node with a black circle. In Fig. 9, the lane attribute data and the lane centerline shape data are denoted by links (solid lines) connecting nodes of black circles. In Fig. 9, to simplify the description, illustration of map data related to the boundary of the lane (lane boundary data and lane boundary shape data) is omitted. Further, in Fig. 9, to simplify the description, in a lane group area where lane connectivity data (nodes indicated by black circles) is acquired (prefetched), the acquired lane group connectivity data (nodes indicated by white circles) is not illustrated. Each lane group area illustrated in Fig. 9 is assumed to be present in a range from the host vehicle to a middle distance (see Fig. 5).

A situation (a1) in Fig. 9 is a situation before the host vehicle deviates from the route. Thus, in this situation, at least the lane group connectivity data, the lane connectivity data, the lane attribute data, and the lane centerline shape data are prefetched (acquired) in each lane group area present along the original route Ro set in advance by the car navigation system 3. In the lane group area present at a short distance from the host vehicle, the lane boundary data and the lane boundary shape data, and a peripheral image in front of the host vehicle captured by the camera in the sensor unit 12 are also acquired.

In addition, in the situation (a1), in the lane group area on the peripheral route of the original route Ro, mainly, only the lane group connectivity data is prefetched (acquired) (see the nodes with open circles in the drawing). However, at the entry point INa to the expressway, the route branches to a route different from the original route Ro. Thus, in the situation (a1), the lane connectivity data, the lane attribute data, the lane centerline shape data, and the like are further prefetched in some lane group areas present along another route from the lane group area including the entry point INa in consideration of the possibility of deviation of the host vehicle to another route (see "DEVIATION PREDICTION" in Fig. 9).

A situation (b1) in Fig. 9 is a situation in which the host vehicle has gone straight (deviated) without turning right at the entry point INa after the situation (a1) in view of the traffic congestion situation of the expressway. In this case, the map processing device 2 (candidate route search unit 22) of the host vehicle performs processing of searching for a new route Rn to the destination using the lane group connectivity data prefetched in each lane group area ahead of the route after the deviation. Then, in the situation (b1), a plurality of routes including a return route (candidate route Rc) to the expressway from the entry point INb toward the junction point B are obtained as candidate routes of the new route Rn through this search processing.

After the situation (b1), the map processing device 2 (the route selection unit 23) of the host vehicle selects candidate routes in ascending order of the read amount of the high-precision map data (in ascending order of the number of nodes to be newly read), and determines whether the candidate route is suitable for autonomous driving travel of the host vehicle. That is, the route selection unit 23 selects candidate routes in the order of sooner route to return to the expressway and determines whether the candidate route is suitable for autonomous driving travel. Thus, in the example illustrated in Fig. 9, the map processing device 2 (the route selection unit 23) first acquires lane connectivity data and lane attribute data of each lane group area present along the candidate route Rc. This situation is a situation (c1) in Fig. 9. Thus, in the situation (c1), the display mode of the acquired data in each lane group area between the entry point INb and the junction point B is denoted by the nodes indicated by the black circles and the link between the nodes.

In the situation (c1), the map processing device 2 (the route selection unit 23) refers to the lane attribute data of each lane group area present along the candidate route Rc, and determines whether the candidate route Rc is actually suitable for the autonomous driving travel of the host vehicle (whether the candidate route Rc is travelable). Then, in the example illustrated in Fig. 9, it is determined that the candidate route Rc is suitable for autonomous driving travel, and the map processing device 2 (route selection unit 23) determines the candidate route Rc as the new route Rn. Thereafter, on the new route Rn, the map processing device 2 sequentially acquires other pieces of high-precision map data from a prefetching target point close to the host vehicle.

The route change operation is performed by the map processing device 2 when route deviation has occurred as illustrated in Fig. 8 and Fig. 9. In the example of the first route change operation, as the host vehicle travels, the high-precision map data of each used or unused lane group area is appropriately deleted (discarded). In the example of the first route change operation, the case where the original route Ro before deviation is set by the car navigation system 3 has been described, but the present invention is not limited to this configuration. For example, even when the original route Ro before deviation is set by the map processing device 2 (the control unit 10), the new route Rn is determined similarly to the example of the first route change operation.

### <Example of Second Route Change Operation>

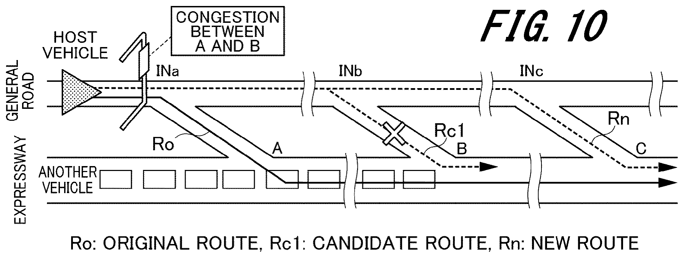

Fig. 10 is a diagram illustrating an outline of a situation when a route deviation has occurred when the host vehicle enters an expressway from a general road, and a second route change operation performed by the map processing device 2 when the situation has occurred.

Since the occurrence situation of the route deviation illustrated in Fig. 10 is similar to that described in Fig. 8, the description thereof will be omitted here. In the example illustrated in Fig. 10, after the route deviation, a return route to the expressway from an entry point INc toward a junction point C with the expressway is determined as the new route Rn. In the example illustrated in Fig. 10, the return route to the expressway from the entry point INb present between the entry point INa and the entry point INc toward the junction point B with the expressway is also the candidate route Rc1, but this candidate route Rc1 is not travelable.

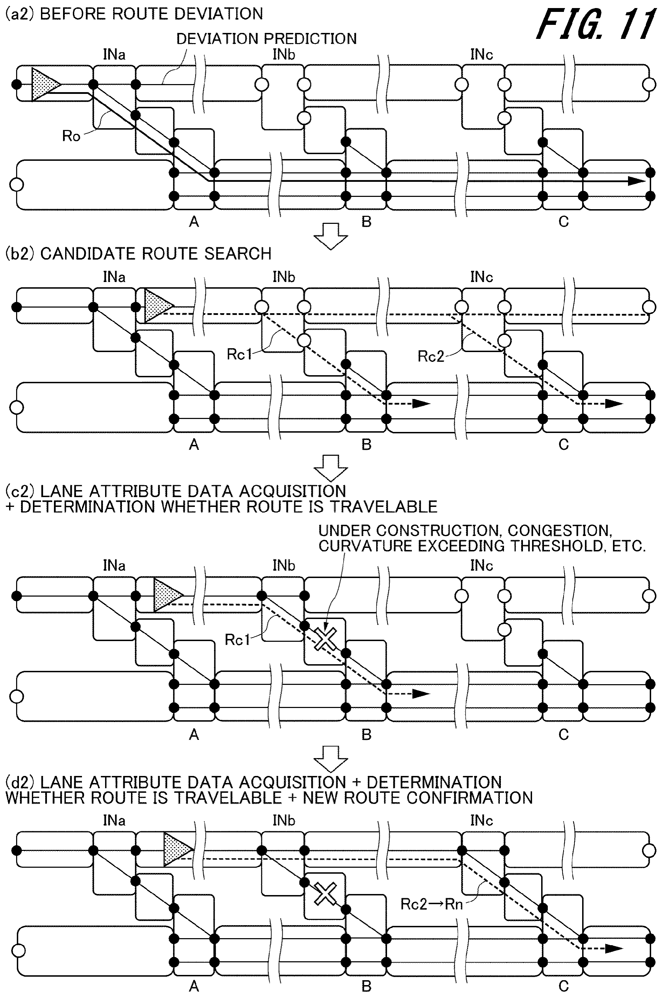

Here, details of the second route change operation performed by the map processing device 2 when the route deviation situation illustrated in Fig. 10 has occurred, that is, the route return operation to the expressway will be described in more detail with reference to Fig. 11. Fig. 11 is a diagram illustrating a relationship between the flow (situation) of the route change operation performed by the map processing device 2 when the route deviation situation illustrated in Fig. 10 has occurred and the prefetched high-precision map data and the acquired high-precision map data in each situation of the route change operation. The display modes of the lane group area and various types of high-precision map data illustrated in Fig. 11 are similar to those described in Fig. 9, and it is assumed that each lane group area illustrated in Fig. 11 is also present in a range from the host vehicle to a middle distance (see Fig. 5).

A situation (a2) in Fig. 11 is a situation before the host vehicle deviates from the route. Thus, in this situation, at least the lane group connectivity data, the lane connectivity data, the lane attribute data, and the lane centerline shape data are prefetched (acquired) in each lane group area present along the original route Ro set in advance by the car navigation system 3. In the lane group area present at a short distance from the host vehicle, the lane boundary data and the lane boundary shape data, and a peripheral image in front of the host vehicle captured by the camera in the sensor unit 12 are also acquired.

In addition, in the situation (a2), in the lane group area on the peripheral route of the original route Ro, mainly, only the lane group connectivity data is prefetched (acquired) (see the nodes with open circles in the drawing). However, at the entry point INa to the expressway, the route branches to a route different from the original route Ro. Thus, in the situation (a2), the lane connectivity data, the lane attribute data, the lane centerline shape data, and the like are further prefetched in some lane group areas present along another route from the lane group area including the entry point INa in consideration of the possibility of deviation of the host vehicle to another route (see "DEVIATION PREDICTION" in Fig. 11).

A situation (b2) in Fig. 11 is a situation in which the host vehicle has gone straight (deviated) without turning right at the entry point INa after the situation (a2) in view of the traffic congestion situation of the expressway. In this case, the map processing device 2 (candidate route search unit 22) of the host vehicle performs processing of searching for a new route Rn to the destination using the lane group connectivity data prefetched in each lane group area ahead of the route after the deviation. Then, in the situation (b2), a plurality of routes including a return route (candidate route Rc1) to the expressway from the entry point INb toward the junction point B and a return route (candidate route Rc2) to the express way from the entry point INc toward the junction point C are obtained as candidate routes of the new route Rn through this search processing.

After the situation (b2), the map processing device 2 (the route selection unit 23) of the host vehicle selects candidate routes in ascending order of the read amount of the high-precision map data (in ascending order of the number of nodes to be newly read), and determines whether the candidate route is suitable for autonomous driving travel of the host vehicle. That is, the route selection unit 23 selects candidate routes in the order of sooner route to return to the expressway and determines whether the candidate route is suitable for autonomous driving travel. Thus, in the example illustrated in Fig. 11, the map processing device 2 (the route selection unit 23) first acquires the lane connectivity data and the lane attribute data of each lane group area present along the candidate route Rc1. This situation is a situation (c2) in Fig. 11.

In the situation (c2), the map processing device 2 (the route selection unit 23) refers to the lane attribute data of each lane group area present along the candidate route Rc1, and determines whether the candidate route Rc1 is actually suitable for the autonomous driving travel (whether the candidate route Rc1 is travelable). In the example illustrated in Fig. 11, a case where the candidate route Rc1 is not suitable for the autonomous driving travel of the host vehicle because of, for example, construction, congestion, a curvature of a lane exceeding a threshold, or the like in the middle of the travel section from the entry point INb to the junction point B is considered. In this case, in the situation (c2), the map processing device 2 (the route selection unit 23) determines that the candidate route Rc1 is not travelable and cannot be determined as the new route Rn (see the white cross mark in the drawing).

After the situation (c2), the map processing device 2 (the route selection unit 23) acquires the lane connectivity data and the lane attribute data of each lane group area present along the candidate route Rc2. This situation is a situation (d2) in Fig. 11. Then, in the situation (d2), the map processing device 2 (the route selection unit 23) refers to the lane attribute data of each lane group area present along the candidate route Rc2, and determines whether the candidate route Rc2 is actually suitable for the autonomous driving travel of the host vehicle. In the example illustrated in Fig. 11, a case where the candidate route Rc2 is actually suitable for autonomous driving travel is considered. In this case, in the situation (d2), the map processing device 2 (the route selection unit 23) determines the candidate route Rc2 as the new route Rn. Thereafter, on the new route Rn, the map processing device 2 sequentially acquires other pieces of high-precision map data from a prefetching target point close to the host vehicle.

The route change operation is performed by the map processing device 2 as described above when route deviation has occurred as illustrated in Fig. 10 and Fig. 11. In the example of the second route change operation as well, as the host vehicle travels, the high-precision map data of each used or unused lane group area is appropriately deleted (discarded). In the example of the second route change operation, the case where the original route Ro before deviation is set by the car navigation system 3 has been described, but the present invention is not limited to this configuration. For example, even when the original route Ro before deviation is set by the map processing device 2 (the control unit 10), the new route Rn is determined similarly to the example of the second route change operation.

### [Various Effects]

As described above, in the map processing device 2 of the present embodiment, when the high-precision map data is prefetched (acquired) from the map distribution server 5, the type of the high-precision map data to be prefetched (acquired) is changed according to the distance from the host vehicle position to the prefetched target point on the scheduled travel route. For example, as described above, when the distance on the travel route from the host vehicle position to the prefetching target point is a short distance, all types of high-precision map data are prefetched, and when the distance is a long distance, only the lane group connectivity data is prefetched. Thus, in the map processing device 2 of the present embodiment, the capacity of the high-precision map data held in the device can be reduced, which can reduce the capacity of the storage that holds the map data in the device and reduce the cost. In addition, in the present embodiment, at a prefetching target point present in a short distance from the host vehicle position, all types of high-precision map data, that is, various types of high-precision map data necessary for assistance for autonomous driving or the like are prefetched, and thus the performance of the map processing device 2 is maintained. From these, in the map processing device 2 of the present embodiment, it is possible to achieve both the reduction in the capacity of the storage that holds the map data in the device and the maintenance of the performance of the device.

In the map processing device 2 of the present embodiment, at the time of prefetching (acquiring) the map data from the map distribution server 5, only the lane group connectivity data of the prefetched target point is prefetched when the prefetched target point is not on the scheduled travel route. Thus, in the present embodiment, the capacity of the high-precision map data held in the device can be further reduced.

The map processing device 2 of the present embodiment acquires a peripheral image in front of the host vehicle for a point present at a short distance from the host vehicle, and does not acquire high-precision map data for a lane that is not included in the peripheral image. Thus, in the present embodiment, the capacity of the high-precision map data held in the device can be still further reduced.

As described above, the map processing device 2 of the present embodiment has a route deviation prediction function. Specifically, when there is a branch point from which a deviation may occur on the scheduled travel route, not only the lane group connectivity data but also various types of high-precision map data necessary for assistance for autonomous driving or the like, such as lane connectivity data, are prefetched for a point (some points after the divergence point) within a range of a predetermined distance from the branch point on the route in which a deviation may occur. Thus, in the present embodiment, even when the travel route has deviated from the scheduled travel route, various types of high-precision map data such as lane connectivity data are prefetched in a part of the determined new route, and thus, it is possible to more quickly return to autonomous driving on a new route.

In the map processing device 2 of the present embodiment, when the host vehicle has deviated from the scheduled travel route during autonomous driving, a new scheduled travel route is searched for using the lane group connectivity data prefetched in the deviated route. Thus, in the present embodiment, even when the host vehicle has deviated from the scheduled travel route during autonomous driving, a new scheduled travel route can be quickly determined, and an early return to autonomous driving on the new scheduled travel route is also possible.

In addition, in the map processing device 2 of the present embodiment, when a plurality of candidate routes are obtained in the processing of searching for a candidate route at the time of route deviation, each candidate route is picked up in a predetermined order set in advance, and it is determined whether the candidate route that has been picked up is travelable. At this time, in the present embodiment, a plurality of types of criteria are provided as criteria of the pickup order of the candidate routes that can be set. Specifically, as described above, the criteria of the pickup order such as ascending order of the reading amount of the high-precision map data, ascending order of the distance of the candidate route, ascending order of the required time to the destination, and the order considering the search conditions of the first scheduled travel route set by the car navigation system 3 or the like are provided. In the present embodiment, the driver or the like can select a predetermined criterion from these criteria. Thus, when such a function is provided, it is possible to perform the determination processing for the new route according to the needs and the priority of the user.

### [Modification]

In the above-described embodiment, a configuration example in which the car navigation system 3 is provided separately from the map processing device 2 has been described, but the present invention is not limited to this configuration. The car navigation system 3 may have the above-described various functions of the map processing device 2. In such a case, the car navigation system 3 functions as the map processing device 2. The function of the car navigation system 3 may be provided in the map processing device 2, and in such a case, it is not necessary to provide the car navigation system 3. Similarly, the autonomous driving control device 4 may have the above-described various functions of the map processing device 2.

In the above-described embodiment, an example in which lane connectivity data, lane attribute data, lane boundary data, lane centerline shape data, lane boundary shape data, and lane group connectivity data are separately provided as the high-precision map data to be processed has been described, but the present invention is not limited to this configuration. Among these pieces of high-precision map data, some pieces of high-precision map data may be collected as one piece of high-precision map data, or one piece of high-precision map data may be finely divided into a plurality of pieces of high-precision map data. Further, as the high-precision map data to be processed, for example, similar map data including information similar to the various types of high-precision map data described above or related data from which the various types of high-precision map data described above can be derived may be used.

In the above-described embodiment, an example in which the map processing device 2 is provided in a vehicle having an autonomous driving function has been described, but the present invention is not limited to this configuration, and the map processing device 2 of the above-described embodiment can also be applied to a vehicle not having an autonomous driving function.

The embodiment examples described above specifically describe the configuration of a device in detail to clearly describe the present invention, and the examples are not necessarily limited to those having all the described configurations. The present invention may take various other application examples and modifications without departing from the gist of the present invention described in the claims.

### Reference Signs List

- 1: In-vehicle system
- 2: Map processing device
- 3: Car navigation system
- 4: Autonomous driving control device
- 5: Map distribution server
- 10: Control unit
- 11: Storage unit
- 12: Sensor unit
- 20: Periphery recognition unit
- 21: Self-position estimation unit
- 22: Candidate route search unit
- 23: Route selection unit
- 24: Lane data prefetching unit
- 25: Map access unit
- 31: Lane connectivity/attribute data storage unit
- 32: Lane boundary data storage unit
- 33: Lane shape data storage unit
- 34: Lane group connectivity data storage unit
- 40: Lane group area
- 41: Lane group connectivity data
- 42: Lane connectivity data
- 43: Lane attribute data, lane centerline shape data
- 44: Lane boundary data, lane boundary shape data
- 45: Physical structure
- 51, 52, 53, 54: Prefetching target point

## Claims

1. A map processing device comprising a map data prefetching unit that can acquire a plurality of types of map data including lane connectivity data indicating connectivity information between lane sections in an extending direction of a lane and lane group connectivity data indicating connectivity information between lane group sections in an extending direction of a lane group including one or more lanes, wherein when acquiring map data of a predetermined point in front of a host vehicle from the plurality of types of map data, the map data prefetching unit acquires the map data of a type according to a condition of the predetermined point.

2. The map processing device according to claim 1,
wherein
the condition of the predetermined point is a distance from a host vehicle position to the predetermined point, and
the map data prefetching unit acquires the plurality of types of map data when the distance from the host vehicle position to the predetermined point is a distance within a predetermined range, and acquires only the lane group connectivity data when the distance from the host vehicle position to the predetermined point is a distance within a specific range more distant than the predetermined range.

3. The map processing device according to claim 1,
wherein
the condition of the predetermined point is whether the predetermined point is a point on a scheduled travel route of the host vehicle, and
the map data prefetching unit acquires the lane connectivity data when the predetermined point is a point on the scheduled travel route of the host vehicle, and acquires the lane group connectivity data when the predetermined point is a point on a route branching from the scheduled travel route of the host vehicle.

4. The map processing device according to claim 3, further comprising a route search unit that searches for a candidate route that can be a new scheduled travel route by referring to the lane group connectivity data acquired at a point on a route where the host vehicle can travel after deviation when the host vehicle has deviated from the scheduled travel route.

5. The map processing device according to claim 4,
wherein
the plurality of types of map data includes lane attribute data including information related to characteristics of a lane and a traveling status, and
the map processing device further includes a route determination unit that, when the route search unit has obtained a plurality of the candidate routes, sequentially selects one of the candidate routes from the plurality of candidate routes according to a preset selection order, acquires the lane attribute data of the candidate route that has been selected, and determines whether the candidate route that has been selected is suitable for traveling of the host vehicle.

6. The map processing device according to claim 3, wherein the map data prefetching unit acquires the lane connectivity data for some points on the route branching from the scheduled travel route of the host vehicle and after a branch point.

7. The map processing device according to claim 1, further comprising an imaging device that captures a peripheral image in front of the host vehicle,
wherein the map data prefetching unit does not acquire the map data related to a lane that is not included in the peripheral image.

8. A map processing method comprising, with a map processing device including a map data prefetching unit capable of acquiring a plurality of types of map data including lane connectivity data indicating connectivity information between lane sections in an extending direction of a lane and lane group connectivity data indicating connectivity information between lane group sections in an extending direction of a lane group including one or more lanes, when the map data prefetching unit acquires map data of a predetermined point in front of a host vehicle from the plurality of types of map data, acquiring the map data of a type according to a condition of the predetermined point.
